# EUROPEAN PATENT SPECIFICATION

(11) **EP 3 895 411 B1**
(45) Date of publication and mention of the grant of the patent: **16.10.2024**
(21) Application number: 19827842.6
(22) Date of filing: 10.12.2019
(51) Int. Cl.: H04N 1/54

(54) **METHOD FOR AUTOMATICALLY OPTIMIZING COLOR MANAGEMENT IN DIGITAL PRINTING ON COLOR SUBSTRATES**
VERFAHREN ZUR AUTOMATISCHEN OPTIMIERUNG DER FARBVERWALTUNG BEIM DIGITALEN DRUCKEN AUF FARBSUBSTRATEN
PROCÉDÉ D'OPTIMISATION AUTOMATIQUE DE LA GESTION DES COULEURS DANS L'IMPRESSION NUMÉRIQUE SUR DES SUBSTRATS EN COULEUR

(30) Priority: 14.12.2018 IT 201800011126
(43) Date of publication of application: 20.10.2021
(73) Proprietor: Devstudio S.r.l., 50136 Firenze (IT); Colorstream S.A.S. di Ontani Riccardo E C., 20090 Cesano Boscone (MI) (IT)
(72) Inventor: ONTANI, Massimo, 20090 Cesano Boscone (MI) (IT)
(74) Representative: Fanfani, Stefano
(86) International application number: PCT/IT2019/050262
(87) International publication number: WO 2020/121353

(56) References cited:
- WO-A2-2007/099554
- US-A1- 2004 027 416
- US-A1- 2013 215 440
- US-A1- 2016 078 329
- US-B2- 9 815 308

## Description

### Technical field

The present invention belongs to the image processing sector for printing processes; in particular, it belongs to the sector of the processes for digitally printing color images on printing supports of various types and natures, such as papers, fabrics, laminates, ceramics, and the like.

More specifically, the invention belongs to the sector of specific softwares dealing with printing on supports having a non-white background color of their own, i.e. a color support.

Specifically, the invention relates to a process for optimizing the configuration and calibration of printing systems using a white dye on color supports, starting from a physical assessment of the color of the substrate made by using a colorimeter, a spectrophotometer, or other instruments of known types.

In particular, the invention can also be used in the sector of printing on ceramic materials and in the DTG (Direct-To-Garment) printing, in printing on textile materials and/or fabric garments, such as for instance T-shirts or sweatshirts, of non-white colors.

### Present status of the art

In modern digital printing systems, deposition of dyes on a printing substrate, or support, is integrally digitally controlled by computer-resident software programs. The dye flow on the printing support is generally controlled by sequentially concatenating a number of transformations, available in the form of interpolating tables, each of which addresses a specific target. The final result of the summation of all of these transformations is a signal capable of driving the different channels of the printer so that the individual dyes are dispensed onto the substrate in the most adequate manner for a creation of a printed product that meets the market requirements.

The individual transformations that drive the printing process can be classified into three basic categories as follows: signal organization transformations, inking control transformations, and colorimetric transformations.

The signal organization transformations structure the signal in such a way as to make it suitable for a printing process. They can, for instance, re-organize the sequence of the dyes by changing the order of the output channels as compared to the input one, grade down the signal of a channel by a constant value, etc.

The inking control transformations, generally referred to as "linearization" transformations, are used to modulate the amount of ink deposited onto a printing substrate so as to prevent refusal phenomena and to enable it to correctly absorb the dyes. They are based on numeric values suitable for describing the density and surface coating properties of the different mixtures of dyes.

The colorimetric transformations manage the color of the printing process and, in the present status of the art, they use operating flows standardized by the International Color Consortium (ICC); they are very articulated and are based on numeric values belonging to the metric color description systems standardized by the *Commission Internationale de l'Éclairage* (CIE).

That being said, it is worth pointing out that three-channel subtractive printing, or three-color printing, also referred to as CMY printing, usually uses inks or toners or the like of cyan (C), magenta (M) and yellow (Y) colors respectively as primary subtractive dyes, being it known that these three colors produce the highest number of colors in subtractive color mixing, i.e. colors perceived with reflective light. However, it is known that actually there are no finite sets of dyes whereby it is possible to get all of the remaining colors by way of a subtractive color mixing; this is the reason why the set of the colors a printing device is capable of producing, called gamut, is always a sub-set of the visible colors. In order to extend the gamut of the CMY three-color printing, a four-color printing or CMYK printing has been developed, wherein a channel is added including the black (K) as a fourth dye, and other two channels with other two dyes are sometimes added, thus obtaining a six-color printing. However further dyes can be added in order to increase the range of printable colors, depending on the specific application and on the image to be printed, hence N printing channels are available in general.

In this way, a progressively better printing quality is achieved, just because the range of the obtainable colors, or gamut, improves as the number N of dyes put at the printing device's disposal increases.

In the industrial practice, color materials are printed by supplementing the four subtractive dyes with a fifth ink, not a process ink, of white color, CMYK+W; the white color is generally used as a base for the latter and in fact it initially coats the printing support surface in order to cancel the effects of the color of the latter on the printed product; obviously, if the white appears in the foreground in the image, it can also be used as a spot color.

According to this printing process, the white dye is used preliminarily, in order to lay a coating layer which neutralizes the background color of the printing support, to enable the process colors to subsequently perform a subtractive synthesis on a practically uniform basic spectral distribution; in this way, in practice, the printing process preliminarily re-creates a white base support, in order to fall back into a standard printing condition, i.e. just that of printing on a white material.

A number of aspects of the above-described solution have been optimized and improved with time; in particular, printing processes have been developed which not only integrally coat the base material with a white dye, before mixing the process inks, but also modulate the latter as a function of a number of parameters, for instance the brightness of the color to be printed, which results in an overall saving in the inking operation.

In particularly advanced printing sectors, such as that of DTG printing, a very widespread process uses a white dye printing configuration basically based on the brightness of the color to be printed, irrespective of the color of the material where printing is made on, the only exception being the white color. In this way, it is simply necessary to configure a static white generation curve as a function of the brightness of the different tones of a grey scale in order to print: for example, all colors featuring a brightness greater than 50% will be printed by using 1000 of white dye, whereas the darker ones will require lower values, and will proportionally reduce down to a predetermined minimum percentage of white to be used with respect to the black spot.

This type of approach makes it possible to reduce the consumption of the white dye, in that the latter is applied to a greater extent in those portions which are intended for being printed with high brightness colors, whereas it is applied to a much lower extent in those portions of the image which feature less bright colors.

So, this method is not capable of taking advantage of the color of the substrate to save the consumption of the remaining color inks, but it is just used to save the white wherever this could be little useful because of the color to be printed being darker; an advantage of this process is in that it is independent of the color of the specific printing substrate, hence does not require for it that the conversion tables dedicated to printing are re-calculated for each individual substrate color.

The just described printing process makes it very easy to release printing drivers that do not require customizations by users, since the tables used to perform a conversion from the colorimetry of the image to be printed to the printing peripheral do not depend on the color of the substrates used by the individual users. The other side of the coin is that these conversion tables, being simply based on an estimate of the quantity of the white necessary for printing a given brightness level, do not allow to take full advantage of the potentialities offered by the color of the substrate, both concerning saving of inks and a possible extension of the gamut of the printable colors.

Printing processes have been developed in a further evolutionary step which, in some cases, take advantage of the background color as a solid color, i.e. with reference to the solid value of the color of the substrate, not modulated by the white; this printing process is especially applied onto black supports, in practice by processing the image by way of a color removal operation aiming at removing the substrate color from the image to be printed, should the color of the substrate not be used as a process color to form other colors, but rather as a separate spot color.

In principle, this process might be applied not only onto black substrates, but also onto substrates of primary colors, but in practice the latter are less widespread.

A need is therefore presently felt for a printing process that allows to use the color of the substrate as a process color, even in those cases wherein the color of the substrate is neither black nor even one of the primary colors.

In other words, a printing process is being searched for in the digital printing sector that allows to take advantage of the background color of the substrate not only for reducing the consumption of dyes but also for extending the gamut of the printing device.

Reducing dye consumption intrinsically offers many advantages, first of all an economical saving and, especially in the DTG sector, also a lower alteration of some characteristics of fabrics, such as softness and the like. Such method should be easy to apply without requiring complex or too long operations by users.

It is worth stating in advance that, in the industrial practice of digital printing, the printing device should be preliminarily prepared on the specific substrate to be used via a printer calibration process; this preparation makes it possible for the printing device to print an input color on the printing output in the most linear and accurate way.

As known, a calibration process comprises a linearization step followed by a profiling step.

In the calibration process, in particular in its linearization step, a so-called linearization target is used, i.e. an image stored in a digital document which comprises a predetermined number of areas featuring homogeneous colors for every dye of the printer, to each of which a different surface dye coating, whose value progressively increases from one area to the other, in a range from a minimum value to a maximum value, corresponds. In the calibration process, reference is also made to the total ink-limit concept, i.e. the maximum value for use of a specific dye of a printer set by the operator for a specific printing mode as a function of a number of parameters such as, for example, the quality of the substrate, the desired resolution, the attitude of the specific substrate to receive that dye, the maximum saturation degree obtainable, and others.

The total ink-limit does not include white because the latter is printed first and the white color already got dry in the moment when the remaining colors are subsequently printed.

In a calibration process, in particular in its profiling step, a so-called profiling target is used, i.e. an image stored in a digital document comprising a plurality of samples of homogeneous colors, each of which is formed of mixtures of one or several dyes.

As already said, in the present status of the art the first step of a calibration process is the linearization one, which comprises the following sub-steps:
a) Producing a linearization target, by using the selected printer, to print first a homogeneous white background on the color substrate to be used, and then a plurality of areas, each having a homogeneous color corresponding to a sample of color obtained by progressively varying the amount of a single dye;
b) Measuring the density of the color of the different samples of homogeneous color, of the printed linearization target, and storing these assessments in a digital document;
c) Defining ink-limits for each individual dye and entering their values in the printer linearization computation software; the ink-limit of the white dye is the same value as used to print the homogeneous white background and is referred to with the abbreviation Wₘₐₓ in the present patent application;
d) Defining the total ink-limit for a plurality of mixtures of dyes, but the white dye;
e) Generating linearization file for the selected printer. The next step in the calibration process is a properly said profiling step which, in the present status of the art, comprises in turn the following sub-steps:
g) Printing a so-called profiling target on the substrate to be used, this target comprising a plurality of samples of homogeneous color, each of which is formed of mixtures of all dyes installed in the printer, but the white one, hence N-1 dyes. The profiling target is to be printed by using the generated linearization and by printing first a homogeneous white background, whose value is Wₘₐₓ. Such homogeneous white background can be modulated by a curve based, for instance, on the brightness of the overlooking color, as used in the present status of the art;
h) Using a color measuring instrument to assess the three-stimulus values for each of the samples of the profiling target and storing their respective colorimetric values in a digital file;
i) Normalizing said colorimetric values, i.e. converting them from absolute colorimetry into relative colorimetry, by way of an operation that, for each sample of absolute colorimetry, divides its value, as assessed by the profiling target, by the absolute colorimetric value corresponding to the usually white substrate, hence the colorimetric value of the sample printed with all intensity values of the process dyes of the printer equals zero;
j) Generating a first lookup table (LUT), called A2B table, which gives a bi-univocal correspondence between the intensity values of the dyes by means of which the mixtures used for printing the samples of the profiling target have been prepared and the three-stimulus colorimetric values read on the test instruments for said samples;
m) Using some mathematic processings of known types to search for the data providing the solutions to the PCS (Profile Connection Space) input values that result in the highest chromatic correspondence upon printing;
k) Generating a second lookup table, called B2A table, obtained by organizing the previously computed data, in order to provide a bi-univocal correspondence between the three-stimulus colorimetric values of the colors visible to the human eye (colorimetric space used by the ICC and called PCS, Profile Connection Space) and the intensity values of the dyes of the printer.

Then a conversion is made of the image to be printed by using the just created printing profile; in this way, for every spot of the image to be printed, the profile converts its corresponding colorimetric values into mixtures of dyes.

U.S. patent applications US 2013/215440 (A1) and US 2016/078329 (A1) disclose calibration processes using background color as a virtual color for the generation of an ICC profile, however, when the color of the printing support changes, it is necessary to print and read a new profiling target for every new substrate of a different color.

### Objects and summary of the invention

A first object of the present invention is therefore to provide a method for taking advantage of the substrate color, referred to as BG, in printing on color supports with colors comparable to the colors of four-color printing, i.e. black, cyan, magenta, and yellow; thus minimizing the need for parametrization by final users, thanks to the fact that this method is capable of automatically selecting the optimum mixtures of subtractive dyes and white dye suitable for printing any desired colors on a given non-white support corresponding to a color whatsoever of four-color printing. This result is achieved by performing an innovative profiling, i.e. by generating a printing profile that uses the BG color of the substrate, modulated by the white ink, as if it also were a process color, even though of a virtual, non-real nature, in replacement of the subtractive dyes typically installed on the printing device, so that the BG color of the printing support concurs to create the colorimetric tables, hence their respective profiles and device-links.

In this connection it is pointed out here that, in the reference sector, it is known that the device-link term indicates a concatenation of two or more peripheral profiles, i.e. two traditional profiles, which allows for a direct conversion from one color space to another, in one direction only. So, it is a profile that links two specific peripherals to each other and consequently it is dependent on these peripherals.

It is possible to create a device-link profile starting from any pairs of peripheral profiles by linking them to a rendering intent whatsoever.

As a matter of fact, the method according to the present patent application makes it possible to generate colorimetric tables both in the form of an ICC (International Color Consortium) profile and of a Device-Link ICC profile, so as to allow for their use in most graphics and image manipulation programs presently widespread on the market.

An algorithm, called modelling algorithm, is also an integral part of this invention and is very advantageous when the color of the printing support changes; as a matter of fact, it is an algorithm that allow to automatically generate the colorimetric tables relevant to a new substrate color, without being obliged to print and read a new profiling target for every new substrate of a different color.

The modelling algorithm needs the given color of the new substrate to print, whose three-stimulus values can be measured by using an appropriate test instrument, such as a spectrophotometer, or in another way, for instance by comparison.

In short, the modelling algorithm starts from a given color of a new substrate and from reading the profiling target printed on a reference substrate, preferably of a medium grey color, to allow for a theoretical recovery of the profiling target of the printer relevant to the new substrate.

A not less important object of this invention is achieved in the case where the BG color of the substrate is not comprised in the gamut of the printer generated according to the traditional method, which uses the physical inks installed and the solid white dyes as a base color for printing the linearization and profiling targets. In this case the present invention provides a method that uses the BG color of the substrate for extending the printable tonal range, as if the BG color of the substrate were to all effects a process dye that adds to those which the printer being used is provided with, or integrally replaces at least one of them.

A further object of the method according to the present invention is to reduce the consumption of the inks physically installed on a printer as much as possible, by using the BG color of the printing support mixed with the white ink, in an at least partial replacement of the dyes of the printer, as much as possible and in order to print a given color.

A further object of the invention, as a consequence of the reduced volume of inks used, hence of the reduced thickness of the ink layer on a fabric or on other substrates comparable therewith, such as hides or the like, is to provide a method for a digital printing on color supports that retains the tactile characteristics of the substrate used for printing, thanks to the latter being not unnecessarily coated by a white dye, which stiffens it and affects its softness in the printed portion.

In other words, this invention aims at providing a process that automatically regulates the signal being sent to the channels for controlling the emission of the inking devices of a digital printer comprising the white dye, after previously assessing the BG color of the surface of the substrate to be printed and using the color of the latter both for extending the gamut of the printer and for reducing ink consumptions.

Other objects and advantages of the invention will be apparent to those skilled in the art upon reading the following text.

In an absolutely original manner, the method according to the present invention uses a profile that always includes the BG virtual dye; in the case of a four-color printing, the profile can have four channels only, wherein one of the channels of the base color, or black, is replaced by the BG color of the substrate, modulated by the white dye W; for example, should the color of the substrate be black K, or any of the three base colors: yellow Y, magenta M or cyan C. Of a particularly great importance is the case of a black substrate, considering that this type of substrate is widespread.

### Brief description of the drawings

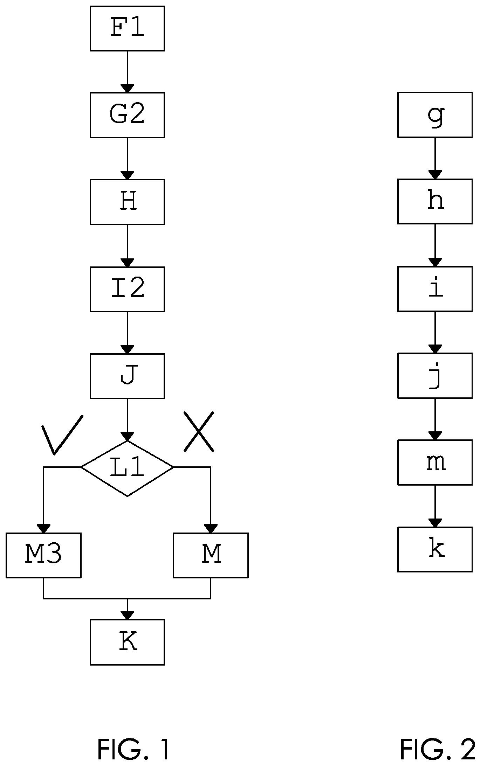

**Figure 1** illustrates an embodiment of the invention using a substitutive BG virtual dye, which comprises the following steps, to be carried out after linearization:
   F1) Transforming the signal organization;
   G2) Printing the four-color profiling target, formed of a mixture of the three real subtractive dyes. The channels of the real dyes are three, not four, because the channel corresponding to the subtractive dye replaced by the BG virtual dye has been set to zero, and the BG virtual dye, generated through the white dye, is added to said three real subtractive dyes. The profiling target shall be printed by using the previously generated linearization;
   H) Assessing the three-stimulus values of the samples of the profiling target and storing them in a given digital file;
   I2) Normalizing the colorimetric values of the sample, all dyes, namely three real dyes and one virtual dye, being set to zero;
   J) Generating a first lookup table, called A2B table;
   L1) Checking whether the BG virtual dye is black (K) or alternative cyan (C), magenta (M), or yellow (Y).
   Should this check (L1) be successful, the BG dye falls within the tolerance range whereby it is sufficiently similar to the black color K and the process continues with the subsequent steps:
   M3) Selecting that mixture, among the mixtures of output dyes that make-up possible solutions reproducing the desired color, internally to a predetermined tolerance range, in which the black is generated by the component K only and does not contain any three-color components;
   K) Generating a second LUT table, called B2A table.
   Should the check (L1) be unsuccessful, the process continues with the following steps, in accordance with the present status of the art:
   M) Searching for data that make-up solutions to those PCS input values which provide the highest chromatic correspondence upon printing, by using a standard algorithm of a known type;
   K) Generating a second LUT table, called B2A table.
**Figure 2** illustrates a calibration process for a printer, carried out according to the present status of the art after linearization; the process comprises the following steps:
   g) Printing a profiling target formed of mixtures of all of the N-1 dyes of the printer, but the white dye, which is preliminarily used for printing a homogeneous white background whose value is Wₘₐₓ;
   h) Assessing the three-stimulus values of the samples of the profiling target and storing their respective colorimetric values in a digital file;
   i) Normalizing the colorimetric value by dividing the absolute colorimetric value assessed for every sample by the absolute colorimetric value of the substrate;
   j) Generating a first LUT table, called A2B table;
   m) Searching for solutions to the PCS input values that give the highest chromatic correspondence upon printing;
   k) Generating a second LUT table, called B2A table.

### Detailed description of the invention

In accordance with the invention, the BG virtual dye is used as a substitutive dye of one of the base dyes of the printer, hence, in the case of a four-color printing, this process can only be applied in the case that the color of the substrate is black (K), cyan (C), magenta (M), or yellow (Y) in terms of colorimetric coordinates; it is worth pointing out that said equality between the color of the substrate and one of the four colors of four-color printing is considered to exist, provided the similarity falls within the limits of a predetermined tolerance range.

The objects described above are achieved by using the following preliminary steps before the profiling target printing step (G2).
F1) Transforming the organization by cancelling the base color channel corresponding to the color of the substrate and allocating the value W=100-BG to the white channel W.

According to a non-limitative example, if operating on a printer with five dyes C, M, Y, K, W and printing on a black substrate, the method according to the present invention operates by transforming the signal from four channels (C, M, Y, K) into five channels (C, M, Y, 0, W), generating the white channel W on the fifth channel, allocating a value W=100-K thereto, and cancelling the fourth channel (K=0). For a substrate whose color is cyan (C), this transformation operates by transforming the signal from four channels (C, M, Y, K) into five channels (0, M, Y, K, W), generating the white channel W on the fifth channel, allocating a value W=100-C and cancelling the first channel (C=0).

Subsequently the profiling step continues according to a scheme comprising the sub-steps described below:
G2) Printing a four-color profiling target formed of mixtures of the three real subtractive dyes, the channel corresponding to the substitutive subtractive dye being set to zero, plus the BG virtual dye, generated via the white dye; the profiling target is to be printed by using the previously generated linearization;
H) Assessing the three-stimulus values of each of the samples of the profiling target and storing their respective colorimetric values in a digital file;
I2) Normalizing the colorimetric values of the sample, all dyes, including the three real dyes and the BG virtual dyes, being set to zero;
J) Generating a first LUT table, called A2B table.

It is worth pointing out that, after generating the first LUT table, called A2B table, a first condition or a second condition might occur, depending on whether the color of the substrate, also called background color or BG virtual color, is black or alternatively one out of the three cyan (C), magenta (M), or yellow (Y) colors.

The method continues differently depending on the outcomes of the following step:
L1) Checking whether the BG virtual color is black (K) or alternatively one of the cyan (C), magenta (M), or yellow (Y) colors;

Should the color of the printing substrate be found to be black (K), the method according to the present invention goes to the follow step:
M3) Searching for that mixture of dyes, among the solutions relevant to each PCS input value, that leads not only to a reduced total consumption of the ink but also to a total elimination in the use of the black dye physically installed on the printer, substituted by the virtual black, i.e. by the white-modulated BG color of the substrate; this search is conducted by using an algorithm that is called virtual black algorithm;
K) Generating a second LUT table, called B2A table.

The virtual black algorithm operates by selecting, among the solutions (mixtures of output dyes) having a neutral component that reproduces the desired color internally to a predetermined tolerance range, that wherein the black is only generated by the component K and does not have any three-color components, and consequently, has the highest quantity of virtual dye and the lowest total consumption, owing to the W = 100 - K transformation.

A neutral component is a chromatic free component and lays on the grey axis as a function of brightness.

Conversely, in those cases wherein it results from the check L1 that the color of the printing substrate is cyan (C), magenta (M), or yellow (Y), the method according to the present invention goes to the following steps:
M) Searching for data that make-up solutions to the PCS input values resulting in the highest chromatic correspondence upon printing, by using a standard algorithm of a known type;
K) Generating a second LUT table, called B2A table.

The method in accordance with the present invention comprises a modeling algorithm, used to prevent the profiling target from being printed and read out on the substrate to use, if such operations have already being performed on one and the same substrate of a different shade.

As a matter of fact, in many production sectors such as, for example, the textile and ceramic sectors, assessing the colors of a so high number of profiling targets relevant to one and the same type of substrate with different shades, for example cotton T-shirt of different colors, by means of test instruments, might constitute a bottleneck in the production flows.

The modelling algorithm makes it possible a theoretical algorithmic reconstruction of the measurements of the profiling target of the printer on a different substrate color, starting from the real measurements of a profiling target on a reference substrate having a medium grey color, such measurement are used for generating a profile on a substrate having a different shade automatically, i.e. without being obliged to print and read a profiling target. In order to obtain the start colorimetric data that enables the color management system to make computations aiming at saving ink and optimizing the gamut, it is necessary that an appropriate sequence of color samples, printed on the substrate being calibrated, be measured by means of a color reading instrument suitable for assessing the light reflected by a surface (colorimeter or spectrophotometer). Color measurements, which might be carried out by using colorimetric or spectrophotometric techniques, are used to specifically sample the different mixtures of dyes used and to classify the results obtained from said mixtures after printing the latter on a material of the same type as that which will be used for printing.

In general, the profiling target is implemented by including a consistent number of mixtures of the different dyes, typically about 800 to 1000 samples of color in the case of a CMYKW printer.

So, a first step is necessary upstream of the present automatic process, wherein it is necessary to print and subsequently read a profiling target on a substrate of the same type as that which will be used for printing, but of a neutral grey color.

The substrate modelling algorithm is capable of creating a model of the impact a given set of dyes, including the white one, has onto a given substrate, by abstracting it from the color of the substrate itself, and of using it for computing their own color spaces of all possible chromatic varieties of the substrate. To do this, the modelling algorithm, besides measuring the profiling target on the reference substrate of a neutral grey color indeed, only requires an indication of the numeric values of the color to be allocated to the substrate; regardless of said numeric data being spectral data, values for the color spaces according to the CIE (*Commission Internationale* de *l'Éclairage*) standard, or simply triplets of RGB values referred to a monitor, a camera, or the like.

The modelling algorithm uses the following as input data:
i) The measurement of a complete table, i.e. a profiling target, of mixtures of subtractive dyes and white applied onto a given support of a medium grey color, called base or reference support;
ii) Each individual measurement relevant to the color of a second printing support, or the simple indication of the triplet of RGB values, referred to a color different from that of the base support. The RGB values might be, for instance, specified by a user on the basis of a simulation of the substrate color made on a monitor, on the basis of a photograph thereof taken by a digital camera or even in other ways.

The construction of the theoretical readings of the new substrate is based on a computation of the theoretical trapping between the colors.

Reading the profiling target printed on a substrate of a medium grey color makes it possible to know the colorimetric coordinates XYZ of every sample of the profiling target, including the colorimetric coordinates of the background medium grey color.

The colorimetric values of every sample of an intermediate profiling target are theoretically obtained by subtracting the values of the XYZ coordinates of the background medium grey color from the value of the coordinates of every sample, as if said target had been printed on a white substrate.

At this point, it is necessary to have the XYZ coordinates of the color of the new substrate to be profiled at his/her disposal; these coordinates can be obtained directly in the case of data read by a test instrument or, in the case of a comparison made by an operator to colors displayed on a monitor, it would be necessary to use the monitor profile to convert the RGB coordinates into XYZ coordinates.

Subsequently, the theoretical readings of the profiling target on the new substrate are obtained by summing the values of the colorimetric coordinates of the new substrate to each value of the intermediate profiling target.

The modelling algorithm outputs a complete table which contains the colorimetric data relevant to the readings of the profiling target, as if this had been printed on the new support.

It is thus possible to use the methodologies and the algorithms described in the previous paragraphs to generate the profile for an optimized printing relevant to the second support starting from this set of virtual measurements.

In practice, the modelling algorithm makes it possible for a user to configure many printing processes based on materials of different colors by measuring one complete table of color mixtures on a substrate of a neutral grey color, thus reducing the physical sampling of the individual printing substrates, by using a colorimeter or a spectrophotometer, down to few measurements.

For example, assuming that a user has to configure five substrates of different colors, he/she might measure as few as 804 color samples, by using this algorithm, instead of 4000 measurements (800x5=4000), thus saving a lot of time.

In the calibration processes according to the present invention, the modelling algorithm can be applied downstream of step H) wherein the three-stimulus values of the profiling target, obviously printed on a substrate of a medium grey color, are read, and upstream of the normalization step.

## Claims

1. A calibration method for optimizing the use of a digital printer featuring N channels, one of which with a white dye W, on substrates whose color substantially corresponds to one of the colors of the primary dyes, wherein a signal organization transformation is carried out upstream of the profiling target printing step by cancelling the channel of the base color corresponding to the color of the substrate and allocating the value W=100-BG to the white channel W, where BG is the color of the substrate to be printed, the method comprising the following steps:
F1) Checking whether the BG color of the substrate is similar to one of the base dyes C, M, Y, K of an at least four-color printer and, if so, proceeding with a signal organization transformation, by cancelling the base color channel corresponding to the BG color of the substrate and allocating the value W = 100 - BG to the white channel W;
G2) Printing the profiling target with mixtures of all dyes but that substituted by the BG virtual dye, whose channel is set to zero and is generated by way of the W white dye;
H) Assessing the three-stimulus values of each of the samples of the profiling target and storing their respective colorimetric values in a digital file;
H1) Measuring the colorimetric coordinates of a reference profiling target printed on a reference substrate, preferably a substrate of a medium grey color;
H2) Generating the colorimetric coordinates of the individual samples of an intermediate profiling target, by subtracting the colorimetric coordinates of the color of the reference substrate from the value of the colorimetric coordinates of the corresponding samples of the reference profiling target;
H3) Assessing the colorimetric coordinates of the printing substrate;
H4) Generating the theoretical profiling target of the printing substrate by adding the value of the colorimetric coordinates of the printing substrate to the value of the colorimetric coordinates of the intermediate profiling target;
I2) Normalizing the colorimetric values by dividing the colorimetric values of the samples of the profiling target by the value of the sample, all channels including all real dyes and one virtual dye being set to zero;
J) Generating a first LUT table, called A2B table;
L1) Checking whether the BG color of the substrate is similar to the black color K;
If this check is successful, the following steps are carried out:
M3) Searching for that solution, internally to a given Delta E, relevant to each individual input value of the PCS having a neutral component, which reproduces it by using the black component only, then printed, by virtue of the substitution made, through the white-modulated background color, or virtual dye;
K) Generating a second LUT table, called B2A table.
If the check is unsuccessful, the following steps are carried out:
M) Searching for that data which makes up solutions to the PCS inputs values that provide the highest chromatic correspondence upon printing, by using a standard algorithm of a known type;
K) Generating a second LUT table, called B2A table, by using a standard algorithm of a known type.

2. The method according to claim 1, **characterized in that** it does not take account of the BG virtual dye, substitutive of the BG color of the substrate, generated via the white dye W, in computing the total ink-limit, by making the total ink-limit of every dash to be printed, which is allocated during the profiling step, not to take account of the amount of the BG virtual dye.

## Patentansprüche

1. Kalibrierungsverfahren zur Optimierung des Einsatzes eines Digitaldruckers mit N Kanälen, von denen einer mit einem weißen Farbstoff W versehen ist, auf Substraten, deren Farbe im wesentlichen einer der Farben der Primärfarbstoffe entspricht, wobei man vor dem Druckschritt des Profilierungsziels eine Organisationstransformation des Signals durchführt, indem man den Kanal der Grundfarbe, die der Farbe des Substrats entspricht, löscht und dem weißen Kanal W den Wert W = 100 - BG zuordnet, wobei BG die Farbe des zu bedruckenden Substrats ist, das Verfahren umfassend die folgenden Schritte:
F1) Prüfung, ob die BG-Farbe des Substrats einem der Grundfarbstoffe C, M, Y, K eines mindestens vierfarbigen Druckers ähnlich ist, und, wenn dies der Fall ist, Durchführung einer Organisationstransformation des Signals, indem man den Kanal der Grundfarbe, die der BG-Farbe des Substrats entspricht, löscht und dem Weißkanal W den Wert W = 100 - BG zuordnet;
G2) Bedrucken des Profilierungsziels mit Mischungen aller Farbstoffe mit Ausnahme desjenigen, der durch den virtuellen BG-Farbstoff ersetzt wird, dessen Kanal auf Null gesetzt ist und der mit Hilfe des weißen Farbstoffs W erzeugt wird;
H) Erhebung der Drei-Stimulus-Werte jeder der Proben des Profilierungsziels und Speicherung ihrer jeweiligen kolorimetrischen Werte in einer digitalen Datei;
H1) Messung der kolorimetrischen Koordinaten eines auf ein Referenzsubstrat, vorzugsweise ein mittelgraues Substrat, gedruckten Referenz-Profilierungsziels;
H2) Erzeugen der kolorimetrischen Koordinaten der einzelnen Proben eines Zwischenprofilierungsziels durch Subtraktion der kolorimetrischen Koordinaten der Farbe des Referenzsubstrats von dem Wert der kolorimetrischen Koordinaten der entsprechenden Proben des Referenzprofilierungsziels;
H3) Erhebung der kolorimetrischen Koordinaten des Drucksubstrats;
H4) Erzeugen des theoretischen Profilierungsziels des Drucksubstrats durch Addition des Wertes der kolorimetrischen Koordinaten des Drucksubstrats mit dem Wert der kolorimetrischen Koordinaten des Zwischenprofilierungsziels;
I2) Normalisierung der kolorimetrischen Werte durch Division der kolorimetrischen Werte der Proben des Profilierungsziels durch den Wert der Probe, wobei alle Kanäle einschließlich aller realen Farbstoffe und eines virtuellen Farbstoffs auf Null gesetzt werden;
J) Erzeugen einer ersten LUT-Tabelle, genannt A2B-Tabelle;
L1) Prüfung, ob die BG-Farbe des Substrats der schwarzen Farbe K ähnlich ist;
Ist diese Prüfung erfolgreich, werden die folgenden Schritte durchgeführt:
M3) Suche nach der Lösung innerhalb eines gegebenen Delta E, für jeden einzelnen Eingabewert des PCS mit einer neutralen Komponente, die ihn unter ausschließlicher Verwendung der schwarzen Komponente reproduziert, die dann aufgrund der vorgenommenen Substitution durch die weiß-modulierte Hintergrundfarbe, bzw. virtuellen Farbstoff, gedruckt wird;
K) Erzeugen einer zweiten LUT-Tabelle, genannt B2A-Tabelle.
Ist die Prüfung erfolglos, werden die folgenden Schritte durchgeführt:
M) Suche nach den Daten, die die Lösungen für die PCS - Eingabewerte darstellen, die beim Drucken die höchste chromatische Übereinstimmung bieten, mit Hilfe eines Standardalgorithmus eines bekannten Typs;
K) Erzeugen einer zweiten LUT-Tabelle, genannt B2A-Tabelle, mit Hilfe eines Standardalgorithmus eines bekannten Typs.

2. Verfahren nach Anspruch 1, **dadurch gekennzeichnet, dass** es den virtuellen BG-Farbstoff, der die BG-Farbe des Substrats ersetzt und durch den weißen Farbstoff W erzeugt wird, bei der Berechnung des Gesamttintenlimits nicht berücksichtigt, indem das Gesamttintenlimit jedes zu druckenden Strichs, das während des Profilierungsschritts zugewiesen wird, gezwungen wird, die Menge des virtuellen BG-Farbstoffs nicht zu berücksichtigen.

## Revendications

1. Procédé de calibrage pour optimiser l'utilisation d'une imprimante numérique à N canaux, dont un avec un colorant blanc W, sur des substrats dont la couleur correspond sensiblement à l'une des couleurs des colorants primaires, dans lequel une transformation d'organisation du signal est effectuée en amont de l'étape d'impression de la cible de profilage en annulant le canal de la couleur de base correspondant à la couleur du substrat et en attribuant la valeur W = 100 - BG au canal blanc W, où BG est la couleur du substrat à imprimer, le procédé comprenant les étapes suivantes :
F1) Vérifier si la couleur BG du substrat est similaire à l'un des colorants de base C, M, Y, K d'une imprimante au moins quadrichromique et, dans ce cas, procéder à une transformation d'organisation du signal, en annulant le canal de la couleur de base correspondant à la couleur BG du substrat et en attribuant la valeur W = 100 - BG au canal blanc W ;
G2) Imprimer la cible de profilage avec des mélanges de tous les colorants à l'exception de celui remplacé par le colorant virtuel BG, dont le canal est fixé à zéro et qui est généré à l'aide du colorant blanc W ;
H) Déterminer les valeurs tristimulus de chacun des échantillons de la cible de profilage et mémoriser leurs valeurs colorimétriques respectives dans un fichier numérique ;
H1) Mesurer les coordonnées colorimétriques d'une cible de profilage de référence imprimée sur un substrat de référence, de préférence un substrat de couleur gris moyen ;
H2) Générer les coordonnées colorimétriques des échantillons individuels d'une cible de profilage intermédiaire, en soustrayant les coordonnées colorimétriques de la couleur du substrat de référence de la valeur des coordonnées colorimétriques des échantillons correspondants de la cible de profilage de référence ;
H3) Déterminer les coordonnées colorimétriques du substrat d'impression ;
H4) Générer la cible de profilage théorique du substrat d'impression en ajoutant la valeur des coordonnées colorimétriques du substrat d'impression à la valeur des coordonnées colorimétriques de la cible de profilage intermédiaire ;
I2) Normaliser les valeurs colorimétriques en divisant les valeurs colorimétriques des échantillons de la cible de profilage par la valeur de l'échantillon, tous les canaux, y compris tous les colorants réels et un colorant virtuel, étant fixés à zéro ;
J) Générer une première table de correspondance LUT, appelée table A2B ;
L1) Vérifier si la couleur BG du substrat est similaire à la couleur noire K ;
Si cette vérification est positive, les étapes suivantes sont exécutées :
M3) Rechercher la solution, dans un Delta E donné, pour chaque valeur d'entrée individuelle du PCS ayant une composante neutre, qui la reproduit en utilisant uniquement la composante noire, puis imprimée, en vertu de la substitution effectuée, à travers la couleur de fond modulée par le blanc, ou colorant virtuel ;
K) Générer une deuxième table de correspondance LUT, appelée table B2A.
Si la vérification se révèle négative, les étapes suivantes sont exécutées :
M) Rechercher les données qui constituent les solutions aux valeurs d'entrée du PCS qui fournissent la correspondance chromatique la plus élevée à l'impression, à l'aide d'un algorithme standard d'un type connu ;
K) Générer une deuxième table de correspondance LUT, appelée table B2A, en utilisant un algorithme standard d'un type connu.

2. Procédé selon la revendication 1, **caractérisé en ce qu'**il ne tient pas compte du colorant virtuel BG, substitut de la couleur BG du substrat, généré par le colorant blanc W, dans le calcul de la limite d'encre totale, en imposant que la limite d'encre totale de chaque trait à imprimer, qui est attribuée lors de l'étape de profilage, ne tienne pas compte de la quantité de colorant virtuel BG.
